# EUROPÄISCHE PATENTSCHRIFT

(11) **EP 2 037 221 B1**
(45) Veröffentlichungstag und Bekanntmachung des Hinweises auf die Patenterteilung: **03.04.2019**
(21) Anmeldenummer: 08016101.1
(22) Anmeldetag: 12.09.2008
(51) Int. Cl.: B62D 15/02, G01D 5/14

(54) **Zündschloß für ein Kraftfahrzeug**
Ignition lock for a motor vehicle
Serrure de contact pour un véhicule automobile

(30) Priorität: 13.09.2007 DE 102007043784
(43) Veröffentlichungstag der Anmeldung: 18.03.2009
(73) Patentinhaber: Marquardt GmbH, 78604 Rietheim-Weilheim (DE)
(72) Erfinder: Mattes, Johannes, 78567 Fridingen (DE)
(74) Vertreter: Otten, Roth, Dobler & Partner mbB Patentanwälte

(56) Entgegenhaltungen:
- DE-A1- 10 033 536
- DE-A1- 10 123 730
- DE-A1-102006 014 700
- US-B1- 6 380 536

## Beschreibung

Die Erfindung betrifft ein elektronisches Zündschloß.

Ein solches Zündschloß und zugehörige Steuergeräte sind Bestandteile des Zündschloßsystems im Kraftfahrzeug, das unter anderem Schutz gegen unbefugte Benutzung bietet. Das erfindungsgemäße elektronische Zündschloß umfasst ein bewegliches Geber- und/oder Betätigungselement und einen Encoder als Signalerzeugungslement für die Schaltpositionen des Zündschlosses.

Encoder werden zur Detektierung der Position von beweglichen Geber- und/oder Betätigungselementen verwendet. Beispielsweise können solche Encoder in Kraftfahrzeugen zum Einsatz kommen. Bekannte Encoder weisen einen Sensorbaustein zur Detektierung und/oder Ausgabe der Position, insbesondere der Winkelstellung, des Geber- und/oder Betätigungselements auf. Häufig wirkt dabei der Encoder mit einem Steuergerät zusammen, das wiederum in Abhängigkeit von der jeweiligen Position entsprechende Funktionen, Vorgänge o. dgl. auslösen kann. Um Strom zu sparen, kann das Steuergerät zwischen einem stromsparenden Ruhezustand und einem Betriebszustand umschaltbar sein. Befindet sich das Steuergerät im Ruhezustand, so ist jedoch eine Reaktion auf vom Encoder festgestellte Positionsänderungen des Geber- und/oder Betätigungselements nicht möglich.

Der Sensorbaustein arbeitet zumindest im Ruhezustand des Steuergeräts zyklisch. Dabei speichert der Sensorbaustein die aktuelle Position während des jeweiligen Zyklus ab. Die abgespeicherte Position wird bei dem nächsten Zyklus mit der dann aktuellen Position verglichen. Bei Erkennen einer Positionsänderung, insbesondere einer Winkelabweichung, wird ein Wecksignal zum Umschalten des Steuergeräts in den Betriebszustand generiert. Vorteilhafterweise kann somit das Steuergerät solange im energiesparenden Ruhezustand bleiben, bis eine tatsächliche Positionsänderung des Geber- und/oder Betätigungselements auftritt und eine Reaktion des Steuergeräts erforderlich ist.

Der Encoder ist aufgrund der Möglichkeiten zur Energieeinsparung besonders zur Verwendung in Kraftfahrzeugen geeignet. Hierfür ist der Sensorbaustein im Kraftfahrzeug beim jeweiligen Kraftfahrzeug-Geberelement und/oder beim Kraftfahrzeug-Betätigungselement angeordnet und steht in Zusammenwirkung mit dem zugehörigen Kraftfahrzeug-Steuergerät. Solche für die Verwendung in Kraftfahrzeugen vorgesehene Encoder sind aus der DE 100 33 536 A1, DE 101 23 730 A1, DE 10 2006 014 700 A1 und US 6 380 536 B1 bekannt.

Der Erfindung liegt die Aufgabe zugrunde, das Zündschloß derart weiterzuentwickeln, daß Positionsänderungen des Geber- und/oder Betätigungselements auch im Ruhezustand des Steuergeräts dessen entsprechende Reaktion auslösen.

Diese Aufgabe wird bei einem Zündschloß durch die Merkmale des Anspruchs 1 gelöst.

Beim erfindungsgemäßen Zündschloß ist der Sensorbaustein mit einer Elektronik zu dessen Betrieb versehen. Zweckmäßigerweise ist der Sensorbaustein dann in der Art einer integrierten Schaltung (IC), beispielsweise als ASIC, ausgebildet. Desweiteren besitzt der Sensorbaustein einen Ausgang für das Wecksignal in der Art eines Weckausgangs. Mit anderen Worten wird ein Drehwinkelsensor für alle Schaltstellungen eingesetzt, wobei die Schaltung so erweitert ist, daß eine Winkeländerung ein Wecksignal erzeugt, um die restliche Schaltung für das Zündschloß aufzuwecken. Weitere Ausgestaltungen der Erfindung sind Gegenstand der Unteransprüche.

Der Sensorbaustein kann als Magnetsensor, und zwar insbesondere in der Art eines Hallsensors, ausgebildet sein. Dann befindet sich ein mit dem Magnetsensor zusammenwirkender Magnet als Signalgeber am Geber- und/oder Betätigungselement. Eine weitere Verbesserung am Drehmagnet läßt sich dadurch erzielen, daß an dem Magnet eine Vertiefung eingebracht wird. Aufgrund dieser Vertiefung kann dann der Sensor die Positionen bzw. die Drehpositionen besser auswerten.

In einer Weiterbildung schließlich kann der Sensorbaustein noch einen Ausgang für die Ausgabe der Daten zur Position in der Art eines Datenausganges besitzen. Des einfachen Anschlusses an eine Datenleitung halber bietet es sich an, daß der Daten- und/oder Weckausgang des Sensorbausteins in der Art eines Bus-Anschlusses ausgestaltet ist. In einfacher Art und Weise kann der Sensorbaustein die Position als analoge Spannung, als Digitalwert o. dgl. abspeichern. Mit Hilfe der Erfindung ist somit ein Drehwinkelsensor mit Weckausgang für ein Wecksignal geschaffen.

Zweckmäßigerweise ist der Schlüssel in eine Aufnahme an dem Betätigungselement des Zündschlosses, insbesondere an einem Rotor, einführbar. Dadurch ist das Betätigungselement mittels des Schlüssels vom Benutzer manuell in die Schaltpositionen bewegbar. Der Magnet ist mit dem Betätigungselement gekoppelt bewegbar und der Sensorbaustein ist dem Betätigungselement zur Detektierung der Schaltpositionen des Betätigungselements zugeordnet.

Im Gegensatz zur Erfindung sind für die Erkennung der Drehstellung in einem Zündschloß in herkömmlicher Weise elektronische Sensoren oder mechanische Schalter notwendig. Um den Ruhestrom so gering wie möglich zu halten, wird das Steuergerät in einen "Power down" Modus gebracht oder komplett von der Versorgungsspannung getrennt. Um das Steuergerät aufzuwecken, müssen nun zyklisch die Schalter bzw. Sensoren aktiv geschaltet und die Position überprüft werden. Bei mechanischen Schaltern und Positionssensoren ist dies im allgemeinen eher einfach zu realisieren, es wird aber für jede Schaltposition ein Sensor zur eindeutigen Bestimmung benötigt, was entsprechend aufwendig und teuer ist.

Die mit der Erfindung erzielten Vorteile bestehen insbesondere darin, daß eine Kostenersparnis durch die Verwendung von einem einzigen Sensor für alle Positionen erzielt wird. Jede beliebige Position kann mit Hilfe des Encoders, insbesondere des Drehwinkelsensors, erkannt werden, nicht nur wie bisher die festen Positionen. Der Sensor kann einfacher auf einer Leiterplatte bestückt werden. Bestücktoleranzen sind insoweit unkritisch, da Initialtoleranzen bei der Erstinitialisierung ausgeglichen werden können. Es kann auch eine Kompensation bzw. Kalibrierung während der Lebensdauer stattfinden, so daß dadurch Temperatur- und/oder Alterungseinflüsse ausgeglichen werden können.

Ausführungsbeispiele der Erfindung mit verschiedenen Weiterbildungen und Ausgestaltungen sind in den Zeichnungen dargestellt und werden im folgenden näher beschrieben. Es zeigen
- Fig. 1: einen Encoder zur Positionsdetektierung in schematischer Darstellung,
- Fig. 2: einen Lenkstockschalter für ein Kraftfahrzeug in schematischer Art,
- Fig. 3: ein Lenkrad für ein Kraftfahrzeug in schematischer Art,
- Fig. 4: ein Zündschloßsystem für ein Kraftfahrzeug in schematischer Ansicht und
- Fig. 5: einen Magneten zur Zusammenwirkung mit dem Winkelencoder,
wobei die Ausführungen gemäß Fig. 2 und Fig. 3 nicht zur Erfindung gehörig sind.

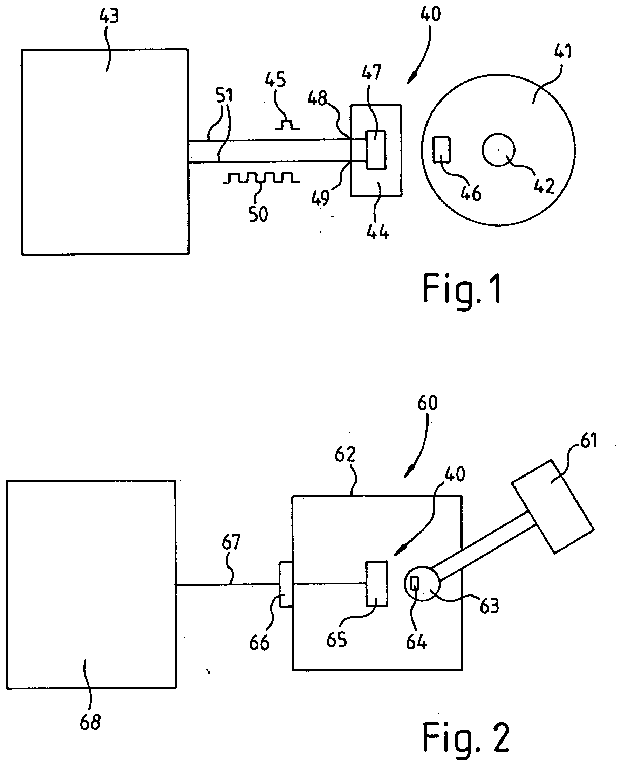

In Fig. 1 ist in einer Prinzipdarstellung ein Encoder 40 für die Detektierung der Position eines beweglichen Geber- und/oder Betätigungselement 41 zu sehen. Das Geber- und/oder Betätigungselement 41 ist vorliegend als eine um ein Drehlager 42 drehbare Welle ausgestaltet. Der Encoder 40 umfaßt einen Sensorbaustein 44 zur Detektierung und/oder Ausgabe der Position des Geber- und/oder Betätigungselements 41. Insbesondere dient der Encoder 40 vorliegend als Winkelencoder in der Art eines Drehwinkelsensors zur Detektierung der Winkelstellung der Welle 41. Hierfür ist der Sensorbaustein 44 als Magnetsensor, und zwar bevorzugterweise als Hallsensor, ausgebildet. Am Geber- und/oder Betätigungselement 41 ist ein Magnet 46 zum Zusammenwirken mit dem Magnetsensor 44 angeordnet.

Der Encoder 40 wirkt mit einem Steuergerät 43 zusammen, indem der Sensorbaustein 44 die jeweils ermittelte Position des Geber- und/oder Betätigungselements 41 an das Steuergerät 43 übermittelt. Das Steuergerät 43 ist zur Energieeinsparung zwischen einem stromsparenden Ruhezustand und einem Betriebszustand umschaltbar. Der Sensorbaustein 44 arbeitet zumindest im Ruhezustand des Steuergeräts 43 zyklisch. Dabei speichert der Sensorbaustein 44 die aktuelle Position des Geber- und/oder Betätigungselements 41 während des jeweiligen Zyklus ab. Im Sensorbaustein 44 kann die jeweilige Position als analoge Spannung, als Digitalwert o. dgl. abspeichert sein. Die abgespeicherte Position wird bei dem nächsten Zyklus mit der dann aktuellen Position verglichen. Bei Erkennen einer Positionsänderung, insbesondere bei einer Winkelabweichung der Welle 41, generiert der Sensorbaustein 44 ein Wecksignal 45 zum Umschalten des Steuergeräts 43 in den Betriebszustand.

Der Sensorbaustein 44 ist mit einer Elektronik 47 versehen und in der Art einer integrierten Schaltung (IC) ausgebildet. Beispielsweise kann der Sensorbaustein 44 als ein anwenderspezifischer Schaltkreis (ASIC) ausgestaltet sein. Der Sensorbaustein 44 besitzt einen Ausgang 48 für das Wecksignal 45 in der Art eines Weckausgangs. Weiter besitzt der Sensorbaustein 44 einen Ausgang 49 für die Ausgabe der Daten 50 in der Art eines Datenausganges. Bei den ausgegebenen Daten 50 handelt es sich insbesondere um die jeweilige Position des Geber- und/oder Betätigungselements 41. Der Datenausgang 49 und/oder der Weckausgang 48 des Sensorbausteins 44 ist in der Art eines Bus-Anschlusses ausgestaltet.

Das Wecksignal 45 sowie die Daten 50 zur Position des Geber- und/oder Betätigungselements 41 werden über einen Bus 51 dem Steuergerät 43 zugeführt. Wie bereits erwähnt, bewirkt das Wecksignal 45 ein Umschalten des Steuergeräts 43 aus dem Ruhezustand in den Betriebszustand. Das Steuergerät 43 kann dann anhand der Daten zur Position des Geber- und/oder Betätigungselements 41 die der jeweiligen Position zugeordnete Aktion und/oder Funktion auslösen.

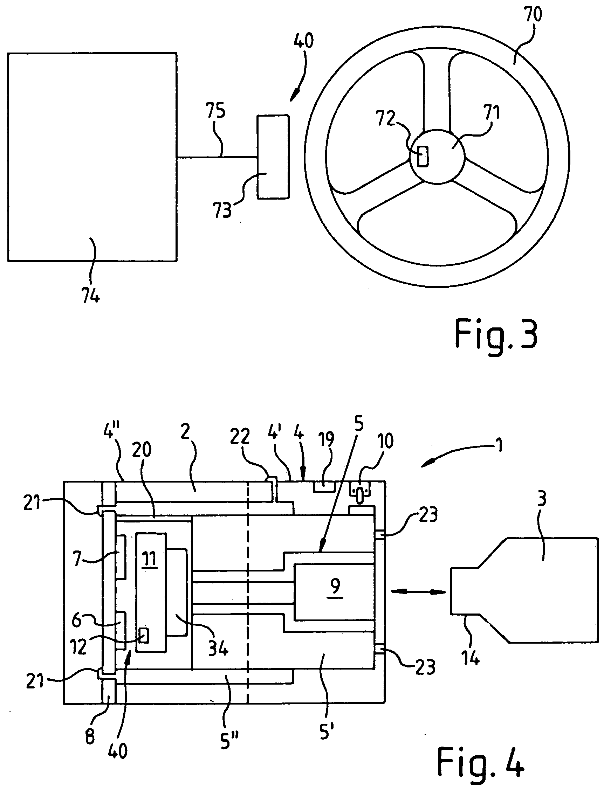

Anhand der Figuren 2 und 3 sollen noch Anwendungen für einen solchen Encoder 40 in einem Kraftfahrzeug näher erläutert werden, welche nicht zur Erfindung gehören.

In Fig. 2 ist ein als Lenkstockschalter 60 dienender elektrischer Schalter zu sehen. Der Lenkstockschalter 60 besitzt ein Gehäuse 62, aus dem ein Betätigungsorgan 61 zur manuellen Bedienung durch den Benutzer herausragt. Das Betätigungsorgan 61 ist zum Schalten des Lenkstockschalters 60 dementsprechend bewegbar. Die Schaltpositionen des Lenkstockschalters 60 werden wiederum mittels eines Encoders 40 detektiert, so daß der Encoder 40 als Signalerzeugungselement für das Betätigungsorgan 61 dient.

Im Gehäuse 62 ist eine Welle 63 zur drehbeweglichen Lagerung des Betätigungsorgans 61 befindlich. An der Welle 63 ist ein Magnet 64 angeordnet, so daß der Magnet 64 mit dem Betätigungsorgan 61 gekoppelt bewegbar ist. Ein im Gehäuse 62 befindlicher Sensorbaustein 65 ist der Welle 63 und damit dem Betätigungsorgan 61 zur Detektierung der Position des Betätigungsorgans 61 zugeordnet. Der Weck- und/oder Datenausgang ist in der Art eines Steckanschlusses 66 am Gehäuse 62 angeordnet. Am Steckanschluß 66 ist ein Bus 67 angeschlossen, der wiederum zum zugehörigen Steuergerät 68 führt. Handelt es sich bei dem Lenkstockschalter 60 um einen Blinkerschalter, so werden von dem Steuergerät 68 die der Stellung des Betätigungsorgans 61 zugeordneten Blinkleuchten geschaltet. Selbstverständlich kann in entsprechender Art und Weise wie der Lenkstockschalter 60 auch ein Multifunktionsbedienschalter für die Steuerung eines Navigationssystems, für die Steuerung eines Geschwindigkeitsregelsystems, für die Steuerung einer Multimediaeinheit, für die Steuerung eines Displays o. dgl. oder ein sonstiger elektrischer Schalter, beispielsweise ein Lichtdrehschalter, ausgebildet sein.

In Fig. 3 ist ein Lenkrad 70 zu sehen, das ebenfalls mit einem Encoder 40, der als Lenkwinkelsensor dient, ausgestattet ist. Das Lenkrad 70 besitzt eine Lenkwelle 71, an der ein Magnet 72 angeordnet ist. Ein Sensorbaustein 73 ist der Lenkwelle 71 zur Detektierung der Position der Lenkwelle 71 zugeordnet. Das vom Sensorbaustein 73 generierte Wecksignal sowie zum aktuellen Lenkwinkel für das Lenkrad 70 korrespondierende Daten werden über einen Bus 75 zu einem Steuergerät 74 übertragen. Das Steuergerät 74 verwendet diese Daten beispielsweise für einen elektrischen Lenkungsantrieb (E-Drive-Antrieb) zur Verstellung der Lenkung des Kraftfahrzeugs.

In Fig. 4 ist schließlich ein elektronisches Zündschloß 2 für ein mit einem elektronischen Schlüssel 3 zusammenwirkendes Zündschloßsystem 1 in einem Kraftfahrzeug zu sehen. Das im Armaturenbrett o. dgl. des Kraftfahrzeugs eingebaute Zündschloß 2 besitzt ein Gehäuse 4. Im Gehäuse 4 befindet sich ein aus einer Ausgangsstellung in Betätigungsstellungen bewegbares Betätigungselement 5, das vorliegend als drehbeweglicher Rotor ausgestaltet ist. Der Rotor 5 ist mittels des Schlüssels 3 vom Benutzer drehbar, wozu der Schlüssel 3 in eine Aufnahme 9 am Rotor 5 einsteckbar ist. Weiter ist im Gehäuse 4 ein Signalerzeugungslement 40 angeordnet. Das Betätigungselement 5 wirkt in den Betätigungsstellungen mit dem Signalerzeugungselement 40 zur Erzeugung von Signalen zusammen. Bei den Signalen handelt es sich um Bordnetzsignale für das Kraftfahrzeug, die wiederum zur Auslösung von Funktionen des Kraftfahrzeugs, wie zur Einschaltung der Zündung, zum Starten des Kraftfahrzeugs oder sonstiger bestimmungsgemäßer Funktionen, dienen.

Das Signalerzeugungselement 40 umfaßt einen Sensorbaustein 6, der insbesondere in der Art eines Drehwinkelsensors ausgestaltet ist. Der Sensorbaustein 6 kann die Winkelstellung, in der sich der Rotor 5 befindet, absolut ausgeben. Der jeweilige vom Rotor 5 eingenommene Winkel wird dann vom Sensorbaustein 6 an einen Mikroprozessor 7 zur Weiterverarbeitung übergeben. Der Sensorbaustein 6 sowie der Mikroprozessor 7 sind auf einer Leiterplatte 8 im Gehäuse 4 angeordnet. In bestimmten Stellungen des Betätigungselements 5, die anhand des vom Sensorbaustein 6 ermittelten Drehwinkels detektiert werden, werden Signale erzeugt, womit es sich bei diesen Stellungen des Betätigungselements 5 um die entsprechenden Schaltpositionen des Zündschlosses 2 handelt. Die Signale werden über das Bordnetz, gegebenenfalls nach entsprechender Aufbereitung durch den Mikroprozessor 7, an die nicht weiter gezeigten Steuergeräte im Kraftfahrzeug zur Auslösung der zugehörigen Funktionen weitergeleitet, wobei diese Steuergeräte durch ein entsprechendes Wecksignal vom Sensorbaustein 6 vom Ruhezustand in den Betriebszustand umgeschaltet werden.

Selbstverständlich kann zur Energieeinsparung auch der Mikroprozessor 7 im Zündschloß 2 zwischen einem Ruhezustand und einem Betriebszustand umschaltbar sein. Der Mikroprozessor 7 wird in diesem Fall vom Sensorbaustein 6 mittels des Wecksignals aktiviert, wenn das Zündschloß 2 vom Benutzer bedient wird. Das Zündschloß 2 dient somit als erfindungsgemäß betreibbares Steuergerät im Kraftfahrzeug.

Die Schaltpositionen des Winkelencoders 40, in denen die entsprechenden Signale erzeugt werden, sind mittels Software festlegbar. Damit können verschiedene Varianten des Zündschlosses 2 nach Bedarf hergestellt werden. Zusätzlich zum Signalerzeugungselement 40 kann mindestens ein elektrischer Schalter 10 mit dem Betätigungselement 5 zusammenwirken, wodurch eine Redundanz für mindestens ein Bordnetzsignal und/oder eine Überprüfung der Funktion des Winkelencoders 40 ermöglicht ist.

Der Sensorbaustein 6 wird über eine stromsparende Taktschaltung, wie eine SBC(System Basis Chip)-Schaltung, einen Timer, eine Taktschaltung o. dgl. angesteuert und arbeitet daher zyklisch. Die Taktschaltung, die beispielsweise mit einer Pulsweitenmodulation (PWM) arbeiten kann, wird entsprechend der notwendigen Reaktionszeit so eingestellt, daß der Stromverbrauch des Sensorbausteins 6 auf ein Minimum gesenkt wird. Desweiteren besitzt der Sensorbausteins 6 eine möglichst kurze Auswertezeit, damit die aktive Zeit für den Sensorbausteins 6 möglichst klein bleibt, beispielsweise kleiner als 250 µs. Der Sensorbausteins 6 wird desweiteren auch im Ruhezustand zur Minimierung des Ruhestroms getaktet betrieben.

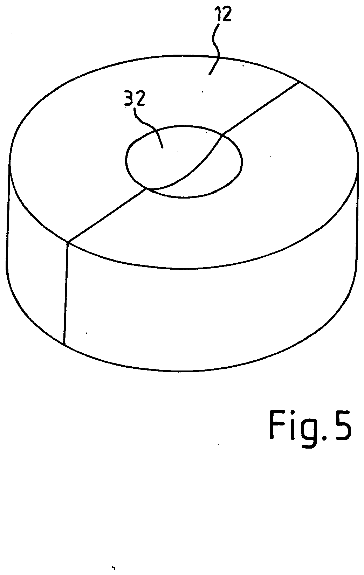

Bevorzugterweise arbeitet der Winkelencoder 40 auf magnetischer Basis. Hierzu ist gemäß Fig. 4 ein Magnet 12 mit dem Betätigungselement 5 gekoppelt, indem der Magnet 12 an einer mit dem Rotor 5 gekoppelten Drehscheibe 11 angeordnet ist. Die Drehscheibe 11 ist wiederum mittels eines Flansches 34 auf den Rotor 5 aufgesteckt. Der Winkelencoder 40 ist dann als Magnetfeldsensor, und zwar in der Art eines Hallsensors ausgestaltet. Wie anhand von Fig. 5 gezeigt ist, kann am Magnet 12 eine Vertiefung 32 eingebracht sein, wobei dank dieser Vertiefung 32 der Sensorbaustein 6 die Drehpositionen verbessert auswerten kann.

Der Sensorbaustein 6 speichert die aktuelle Position des Betätigungselements 5 während des jeweiligen Zyklus ab. Das Abspeichern kann als Digitalwert oder auch beispielsweise als analoge Spannung erfolgen. Die abgespeicherte Position wird dann bei den nächsten Zyklen mit der aktuellen Position des Betätigungselements 5 verglichen. Bei Erkennen einer Positionsänderung, also vorliegend einer Winkelabweichung des Rotors 5, wird ein Wecksignal vom Sensorbaustein 6 zum Umschalten in den Betriebszustand generiert.

Wie weiter in Fig. 4 angedeutet ist, kann nur ein Schlüssel 3 in die Aufnahme 9 eingeführt werden, der mechanisch die richtige Kontur 14 aufweist. Das Einführen und/oder das Herausziehen des Schlüssels 3 in die Aufnahme 9 kann ein "Schlüssel-steckt"- bzw. "Schlüssel-Abzug"-Signal im Zündschloß 2 erzeugen. Im Zündschloß 2 ist eine Spule 19 zur Energieübertragung auf den Schlüssel 2 angeordnet, wenn der Schlüssel 2 in der Aufnahme 9 befindlich ist. Das Gehäuse 4 ist zweiteilig ausgestaltet und besteht aus einem Gehäusevorderteil 4' und einem Gehäusehinterteil 4". Der Rotor 5 ist wenigstens teilweise in einem Zylindervorderteil 5' und einem Zylinderhinterteil 5" angeordnet. Das Zylindervorderteil 5' ist mittels Steckhülsen 20 mit der Leiterplatte 8 elektrisch verbunden. Die Leiterplatte 8 ist mittels Rasthaken 21 auf dem Zylinderhinterteil 5" verrastet. Das eigentliche Zündschloß 2 ist mittels zwei Stiften 23 am Gehäusevorderteil 4' zentriert befestigt. Weiter greifen seitliche Rasthaken 22 am Zylinderhinterteil 5" an Hinterschnitten im Gehäusevorderteil 4' ein.

Zusammenfassend läßt sich für das Zündschloß 2 also feststellen, daß der erfindungsgemäß arbeitende Encoder 40 als Signalerzeugungselement für die Schaltpositionen des Zündschlosses 2 verwendet wird. Der Schlüssel 3 ist in die Aufnahme 9 am Betätigungselement 5 des Zündschlosses 2, also am Rotor, einführbar, derart daß das Betätigungselement 5 mittels des Schlüssels 3 in die Schaltpositionen bewegbar ist. Der Magnet 12 ist mit dem Betätigungselement 5 gekoppelt bewegbar. Der Sensorbaustein 6 ist dem Betätigungselement 5 zur Detektierung der Schaltpositionen des Betätigungselements 5 zugeordnet.

Die Erfindung ist nicht auf die beschriebenen und dargestellten Ausführungsbeispiele beschränkt. Sie umfaßt vielmehr auch alle fachmännischen Weiterbildungen im Rahmen der durch die Patentansprüche definierten Erfindung. So kann anstelle des im Ausführungsbeispiel beschriebenen drehbaren Rotors 5 im Zündschloß 2 auch ein verschiebbares oder in sonstiger Weise bewegbares Betätigungselement verwendet werden. Weiter kann die Erfindung nicht nur an Zündschlössern für beliebige Fahrzeuge Verwendung finden, sondern auch an sonstigen Zündschlössern eingesetzt werden.

### Bezugszeichen-Liste:

- 1:: Zündschloßsystem
- 2:: Zündschloß
- 3:: Schlüssel
- 4:: Gehäuse (von Zündschloß)
- 4':: Gehäusevorderteil
- 4":: Gehäusehinterteil
- 5:: Betätigungselement / Rotor
- 5':: Zylindervorderteil
- 5":: Zylinderhinterteil
- 6:: Sensorbaustein
- 7:: Mikroprozessor
- 8:: Leiterplatte
- 9:: Aufnahme
- 10:: Schalter
- 11:: Drehscheibe
- 12:: Magnet
- 14:: Kontur (am Schlüssel)
- 19:: Spule
- 20:: Steckhülse
- 21,22:: Rasthaken
- 23:: Stift
- 32:: Vertiefung (am Magnet)
- 34:: Flansch
- 40:: Encoder / Winkelencoder / Signalerzeugungselement
- 41:: Geber- und/oder Betätigungselement / Welle
- 42:: Drehlager
- 43:: Steuergerät
- 44:: Sensorbaustein / Magnetsensor
- 45:: Wecksignal
- 46:: Magnet
- 47:: Elektronik
- 48:: Ausgang (für Wecksignal) / Weckausgang
- 49:: Ausgang (für Daten) / Datenausgang
- 50:: Daten
- 51:: Bus
- 60:: Lenkstockschalter
- 61:: Betätigungsorgan
- 62:: Gehäuse
- 63:: Welle
- 64:: Magnet
- 65:: Sensorbaustein
- 66:: Steckanschluß
- 67:: Bus
- 68:: Steuergerät
- 70:: Lenkrad
- 71:: Lenkwelle
- 72:: Magnet
- 73:: Sensorbaustein
- 74:: Steuergerät
- 75:: Bus

## Patentansprüche

1. Elektronisches Zündschloß (2) für ein mit einem elektronischen Schlüssel (3) zusammenwirkendes Zündschloßsystem (1) in einem Kraftfahrzeug, wobei das Zündschloß (2) ein bewegliches Geber- und/oder Betätigungselement (5, 41) und einen Encoder (40) als Signalerzeugungselement für die Schaltpositionen des Zündschlosses (2) umfasst und der Encoder (40), insbesondere ein Winkelencoder in der Art eines Drehwinkelsensors, zur Zusammenwirkung mit einem Steuergerät (43) einen Sensorbaustein (6, 44) zur Detektierung und/oder Ausgabe der Position, insbesondere der Winkelstellung, des Geber- und/oder Betätigungselements (5, 41) aufweist, wobei das Steuergerät (43) zwischen einem stromsparenden Ruhezustand und einem Betriebszustand umschaltbar ist, wobei der Sensorbaustein (6, 44) zumindest im Ruhezustand zyklisch arbeitet, wobei der Sensorbaustein (6, 44) die aktuelle Position während des jeweiligen Zyklus abspeichert, wobei die abgespeicherte Position bei dem nächsten Zyklus mit der dann aktuellen Position verglichen wird, wobei bei Erkennen einer Positionsänderung, insbesondere einer Winkelabweichung, ein Wecksignal (45) zum Umschalten des Steuergeräts (43) in den Betriebszustand generiert wird, wobei der Sensorbaustein (6, 44) mit einer Elektronik (47) als eine integrierte Schaltung (IC) ausgebildet ist, wobei der Sensorbaustein (6, 44) das Wecksignal (45) generiert, und wobei der Sensorbaustein (6, 44) einen Ausgang (48) für das Wecksignal (45) als Weckausgang besitzt.

2. Elektronisches Zündschloß (2) nach Anspruch 1, **dadurch gekennzeichnet, daß** der Sensorbaustein (6, 44) als Magnetsensor ausgebildet ist, und daß am Geber- und/oder Betätigungselement (5, 41) ein Magnet (12, 46) zum Zusammenwirken mit dem Magnetsensor (6, 44) angeordnet ist.

3. Elektronisches Zündschloß (2) nach Anspruch 2, **dadurch gekennzeichnet, daß** der Magnetsensor (6, 44) als Hallsensor ausgebildet ist.

4. Elektronisches Zündschloß (2) nach Anspruch 2 oder 3, **dadurch gekennzeichnet, daß** am Magnet (12, 46) eine Vertiefung (32) eingebracht ist.

5. Elektronisches Zündschloß (2) nach einem der Ansprüche 1 bis 4, **dadurch gekennzeichnet, daß** der Sensorbaustein (6, 44) als ein ASIC ausgebildet ist.

6. Elektronisches Zündschloß (2) nach einem der Ansprüche 1 bis 5, **dadurch gekennzeichnet, daß** der Sensorbaustein (6, 44) einen Ausgang (49) für die Ausgabe der Daten (50) zur Position in der Art eines Datenausganges besitzt.

7. Elektronisches Zündschloß (2) nach einem der Ansprüche 1 bis 6, **dadurch gekennzeichnet, daß** der Daten- und/oder Weckausgang (49, 48) des Sensorbausteins (6, 44) in der Art eines Bus-Anschlusses ausgestaltet ist.

8. Elektronisches Zündschloß (2) nach einem der Ansprüche 1 bis 7, **dadurch gekennzeichnet, daß** der Sensorbaustein (6, 44) die Position als analoge Spannung oder als Digitalwert abspeichert.

9. Elektronisches Zündschloß (2) nach einem der Ansprüche 2 bis 8, **dadurch gekennzeichnet, daß** der Schlüssel (3) in eine Aufnahme (9) am Betätigungselement (5) des Zündschlosses (2) einführbar ist, derart daß das Betätigungselement (5) mittels des Schlüssels (3) in Schaltpositionen bewegbar ist, daß der Magnet (12) mit dem Betätigungselement (5) gekoppelt bewegbar ist, und daß der Sensorbaustein (6) dem Betätigungselement (5) zur Detektierung der Schaltpositionen des Betätigungselements (5) zugeordnet ist.

10. Elektronisches Zündschloß (2) nach einem der Ansprüche 1 bis 9, **dadurch gekennzeichnet, daß** es sich bei dem Betätigungselement (5) um einen Rotor handelt.

## Claims

1. An electronic ignition lock (2) for an ignition lock system (1) acting in combination with an electronic key (3) in a motor vehicle, wherein the ignition lock (2) comprises a movable transmitter and/or actuating element (5, 41) and an encoder (40) as a signal-generating element for the switch positions of the ignition lock (2) and the encoder (40), particularly an angle encoder in the manner of a rotation angle sensor, for the purposes of interaction with a control device (43) has a sensor component (6, 44) for detecting and/or emitting the position, particularly the angle position of the transmitter and/or actuating element (5, 41), wherein the control device (43) is switchable between a power-saving sleep mode and an operating mode, wherein the sensor component (6, 44) works cyclically at least in the sleep mode, wherein the sensor component (6, 44) saves the current position during each cycle, wherein the saved position is compared during the next cycle with the then-current position, wherein upon recognition of a positional change, particularly an angular deviation, a wake-up signal (45) to switch the control device (43) into the operating mode is generated, wherein the sensor component (6, 44) is designed with an electronic circuit (47) as an integrated circuit (IC), wherein the sensor component (6, 44) generates the wake-up signal (45), and wherein the sensor component (6, 44) has an output (48) for the wake-up signal (45) as a wake-up output.

2. The electronic ignition lock (2) according to claim 1, **characterised in that** the sensor component (6, 44) is designed as a magnetic sensor, and **in that** a magnet (12, 46) for interaction with the magnetic sensor (6, 44) is arranged on the transmitter and/or actuating element (5, 41).

3. The electronic ignition lock (2) according to claim 2, **characterised in that** the magnetic sensor (6, 44) is designed as a Hall sensor.

4. The electronic ignition lock (2) according to claim 2 or 3, **characterised in that** a recess (32) is incorporated on the magnet (12, 46).

5. The electronic ignition lock (2) according to one of claims 1 to 4, **characterised in that** the sensor component (6, 44) is designed as an ASIC.

6. The electronic ignition lock (2) according to one of claims 1 to 5, **characterised in that** the sensor component (6, 44) has an output (49) in the manner of a data output for outputting data (50) relating to the position.

7. The electronic ignition lock (2) according to one of claims 1 to 6, **characterised in that** the data and/or wake-up output (49, 48) of the sensor component (6, 44) is designed in the manner of a bus connection.

8. The electronic ignition lock (2) according to one of claims 1 to 7, **characterised in that** the sensor component (6, 44) saves the position as an analogue voltage or as a digital value.

9. The electronic ignition lock (2) according to one of claims 2 to 8, **characterised in that** the key (3) can be inserted into a receptacle (9) on the actuating element (5) of the ignition lock (2), such that the actuating element (5) is movable by means of the key (3) into switching positions, the magnet (12) is movably coupled with the actuating element (5), and the sensor component (6) is assigned to the actuating element (5) for detecting the switching positions of the actuating element (5).

10. The electronic ignition lock (2) according to one of claims 1 to 9, **characterised in that** the actuating element (5) is a rotor.

## Revendications

1. Anti-démarreur électronique (2) pour un système anti-démarrage (1) coopérant avec une clé électronique (3) dans un véhicule automobile, l'anti-démarreur (2) comprenant un élément d'actionnement et/ou transmetteur mobile (5, 41) et un codeur (40) sous forme d'élément de production de signal pour les positions de commutation de l'anti-démarreur (2) et le codeur (40), présente en particulier un codeur angulaire de type capteur d'angle de rotation, destiné à la coopération avec un appareil de commande (43) un module de capteur (6, 44) pour la détection et/ou l'émission de la position, en particulier la position angulaire, de l'élément d'actionnement et/ou transmetteur (5, 41), l'appareil de commande (43) pouvant être commuté entre un état de repos économisant l'énergie et un état de fonctionnement, le module de capteur (6, 44) fonctionnant par cycle au moins dans l'état de repos, le module de capteur (6, 44) mémorisant la position actuelle pendant le cycle respectif, la position mémorisée étant comparée à la position actuelle à ce moment lors du cycle suivant, lors de la reconnaissance d'un changement de position, en particulier d'un écart angulaire, un signal de réveil (45) étant produit pour commuter l'appareil de commande (43) dans l'état de fonctionnement, le module de capteur (6, 44) doté d'un élément électronique (47) étant conçu sous forme d'un circuit intégré (IC), le module de capteur (6, 44) produisant le signal de réveil (45) et le module de capteur (6, 44) possédant une sortie (48) pour le signal de réveil (45) sous la forme d'une sortie de réveil.

2. Anti-démarreur électronique (2) selon la revendication 1, **caractérisé en ce que** le module de capteur (6, 44) est conçu sous la forme d'un capteur magnétique et **en ce qu'**un aimant (12, 46) est disposé sur l'élément d'actionnement et/ou transmetteur (5, 41) afin de coopérer avec le capteur magnétique (6, 44).

3. Anti-démarreur électronique (2) selon la revendication 2, **caractérisé en ce que** le capteur magnétique (6, 44) est conçu sous la forme d'un capteur à effet Hall.

4. Anti-démarreur électronique (2) selon la revendication 2 ou 3, **caractérisé en ce qu'**un évidement (32) est ménagé sur l'aimant (12, 46).

5. Anti-démarreur électronique (2) selon une des revendications 1 à 4, **caractérisé en ce que** le module de capteur (6, 44) est conçu sous la forme d'un ASIC.

6. Anti-démarreur électronique (2) selon une des revendications 1 à 5, **caractérisé en ce que** le module de capteur (6, 44) possède une sortie (49) pour l'émission des données (50) de position de type sortie de données.

7. Anti-démarreur électronique (2) selon une des revendications 1 à 6, **caractérisé en ce que** la sortie de données et/ou de réveil (49, 48) du module de capteur (6, 44) est conçue sous la forme d'un raccordement de barre omnibus.

8. Anti-démarreur électronique (2) selon une des revendications 1 à 7, **caractérisé en ce que** le module de capteur (6, 44) mémorise la position sous forme de tension analogique ou de valeur numérique.

9. Anti-démarreur électronique (2) selon une des revendications 2 à 8, **caractérisé en ce que** la clé (3) peut être introduite dans un logement (9) sur l'élément d'actionnement (5) de l'anti-démarreur (2), de sorte que l'élément d'actionnement (5) puisse se déplacer dans les positions de commutation au moyen de la clé (3), que l'aimant (12) puisse se déplacer par couplage avec l'élément d'actionnement (5) et que le module de capteur (6) soit associé à l'élément d'actionnement (5) pour la détection des positions de commutation de l'élément d'actionnement (5).

10. Anti-démarreur électronique (2) selon une des revendications 1 à 9, **caractérisé en ce que** l'élément d'actionnement (5) est un rotor.
